Europäisches Patentamt

European Patent Office

Office européen des brevets

(11) Publication number: **0 427 891 A1**

## EUROPEAN PATENT APPLICATION

(21) Application number: 89202868.9

(51) Int. Cl.5: **G02B 23/14**

(22) Date of filing: **13.11.89**

(43) Date of publication of application:
**22.05.91 Bulletin 91/21**

(84) Designated Contracting States:
**AT BE CH DE ES FR GB GR IT LI LU NL SE**

(71) Applicant: **CRAIGMIN COMPANY INC.**
**Edificio Bank of America 50 Street**
**Panama(PA)**

(72) Inventor: **Cadarso Montalvo, Francisco Javier**
**Humera, 42**
**28023 Aravaca - Madrid(ES)**

(74) Representative: **Ungria Lopez, Javier et al**
**Avda. Ramon y Cajal, 78**
**E-28043 Madrid(ES)**

(54) Aiming device for light weapons.

(57) The invention relates to an aiming device applicable to light weapon launching tubes, such device to be thrown out together with the said launching tube after making the corresponding shot.

The device, constituted from a framework (1) with means (6 or 7) for assembly on the launching tube, includes an optical system formed by four reflector elements (8), (9), (10) and (11), the first of which may be assembled on a fixed support (15) or on a mobile support (16), the latter being operated with a bimetal (17), attaining a compensation of trajectory drifts. A sight (14) is also included formed by two lenses (5) and (22), lens (5) acting as the actual sight, and lens (22) as corrective lens and reticle, there being between the two a selective reflector (23) that together with a light source (24) allows the reticle to be seen in the dark.

The object glass (13) of the device will be located between the first reflector element (8) and the second reflector element (9).

FIG-13

## AIMING DEVICE FOR LIGHT WEAPONS

### OBJECT OF THE INVENTION

The invention relates to an aiming device for light weapons, specifically applicable to rocket launchers, and to any other type of light weapons with a launching tube to be detached after firing.

The subject aiming device shall be assembled on the respective launching tube of the weapon, to be thrown out together with the latter, if such tube can be thrown out.

The actual device altogether comprises a solid-forged body with its different elements arranged so as to allow accurate aiming, thereby automatically compensating trajectory drifts.

### BACKGROUND OF THE INVENTION

Currently, the optical observation of a reticle to improve the aiming to any object is based on three essential systems: "sight"; "linear optics" and "prism optics".

Linear systems are characterized in that they have all their optical elements aligned in a single axis. Such systems use: an object glass, an eyepiece system and a set of lenses acting as a relay function. The devices based on such linear systems are known as land eyeglasses that, as opposed to astronomical eyeglasses, use these relay lenses or lens to straighten or relay such image.

Given that this linearity increases the device length considerably, the said astronomical eyeglass was substituted, providing it with sets of prisms that carry out the same relay function, wherefore they are called prism systems, and the devices based on such systems are known as prism eyeglasses that, when duly symmetrically doubled, form the well-known prism binoculars.

Now then, both the known linear and the prismatic systems are systems centred on a single optical axis. It should also be borne in mind that, in both systems, the object glass is located at the front of the device, and therefore relay is effected after the image is attracted through the object glass.

The aiming devices manufactured at present, based on the aforesaid systems, have the disadvantage that in the case of linear systems, the devices are very large, whereas in the case of prism systems, the prisms increase the price of the device significantly, which is therefore impractical in the event of the device being provided to be thrown out or used one only.

Furthermore, the devices based on the known systems are not provided with automatic temperature compensating devices, which is almost essential when the trajectory of the projectile discharged is to be properly adjusted, since the temperature changes, included those deriving from the different characteristics of the propellant used in all cases, significantly affect the trajectory of the projectile.

### DESCRIPTION OF THE INVENTION

The object of the invention is to provide an aiming device being economical to manufacture (this being highly significant in the case of a device to be thrown out or used once only), moreover solves the problems and disadvantages of the devices currently used for the same purposes, furthermore operating efficiently.

The device hereof has means that automatically compensate trajectory drifts. It also has means to automatically compensate temperature variations, both environmental and of munitions propellants.

It is moreover fitted with a specially designed sight system that allows the strokes marked on a metallized reticle to be seen in the dark, through the provision of a light source and a selective reflector; with the particularity that the optical axis is determined by the sight system, which remains parallel to the weapon's geometrical axis.

Another novel characteristic of the device lies in the provision of means for fine adjustment or alignment with regard to the weapon geometrical axis, such means comprising a pair of plates one of the ends of which is provided with a sort of spring which may be operated through two external handling screws; such system includes the device object glass itself.

Structurally speaking, the device has a small general framework, the outside being furnished with means to assemble the unit on the weapon launching tube, either through an extension adjusting the outside and curved surface of the launching tube, or by means of dove-tail projections that will be complemented with recesses provided for such purpose on the said launching tube, it having been foreseen that such dove-tail fixing means comprise two different areas of the device framework, so that the latter may be assembled on either side; i.e., so that it can be used by right or left-handed persons without distinction.

The inside of such framework is provided with four reflector elements, comprising the same number of mirrors on which the rays will be duly reflected, it having been foreseen that the first reflector element or mirror be the one receiving the field observed and the one effecting deflection of the device optical axis, chosen in accordance with the characteristics of the invention.

Such first reflector may be assembled on a stiff support, or on a tilting support moved by a bimetal allowing the deflection angle to be varied in accordance with room temperature, and in accordance with the actual munitions propellant, since the propellants can be more or less sensitive to combustion speed change.

Therefore, on the basis of this first mirror or reflecting element, trajectory drifts may be compensated, and it is also possible to manage the observation axis to be inclined, as a consequence of the possibility of varying the angle of the first reflector mirror slightly over 45°. Such characteristic is not provided in conventional devices since their refractor elements are fixed, and therefore observation axis variation in conventional devices implies having to vary the inclination of the device as a whole.

Therefore, on the basis of the special arrangement and mobile assembly of this first reflector element, proper aiming can be effected at any range with no calculations or modification of the sight position with regard to the weapon, in order to compensate the parabolic trajectory defined by the projectiles launched.

Another outstanding novelty of the device resides in the fact that the sight system with which it is equipped, is assembled on an elongate and hollow part that is provided, in addition to such sight system, with the fourth element or reflector mirror.

Such sight system comprises two flat-spherical optical elements, the first of which has a twofold activity as corrective field lens and as reticle; whilst the second optical element acts as an actual sight lens. A selective reflector element is inserted between the said two optical elements forming an angle of 45°, which together with a light source constitutes an epi-illumination means for the reticle, illuminating, when in the dark, the strokes of the said reticle. The light source may be a phosphorus-tritium lamp or a simple electrical lamp.

For its part, the reticle allows passage of light in the direction of illumination, since it is made of transparent glass, reflecting toward the observer only light coming from the reticle strokes metalized on the lens flat surface.

The said sight system involves using a smaller number of elements since the system comprises two lens or elements, whereas conventional systems require six surfaces (two for the reticle, two for the corrective lens and two for the sight lens), this being a consequence of the flat-spherical device elements, unlike the flat-parallel surfaces forming conventional reticles. Such reduction of elements entails a lower manufacturing cost and a significant light increase in the system.

Other advantages stemming from the studied and specific design of the device may be summed up as follows:
- Reflectors (mirrors) are used, which are far cheaper than refractors (prisms) used in conventional devices.
- The object glass lens is located between the first and the second reflector, in a plane parallel to the optical axis of the sight plane and the weapon axis, rather than at the front as in conventional devices. This new arrangement allows the image to be observed with an inclined optical axis, without such image being deformed; whereas in the conventional devices, the whole system, viz. the whole device, would have to be inclined to attain this.
- The reticle illumination system, in the device of the invention, allows the actual reticle strokes to be illuminated; whereas the conventional illumination systems light the glass mass, as light falls on the side edge of the reticle and not on the actual surface of the reticle as is the case of the device of the invention.

## BRIEF DESCRIPTION OF THE DRAWINGS

The characteristics and performance of the devices of the invention will be understood better on the basis of the set of drawings attached hereto. Such drawings show the following:

Figure 1.- Is a rear view of the aiming device, when attached to the weapon tube by means of an extension of the former adjusted to the surface of the said weapon tube.

Figure 2.- Is a side elevation view of the device shown in figure 1.

Figure 3.- Is a front view of the device shown in the foregoing two figures.

Figure 4.- Is the device, as in a previous figure, where the means of attachment to the weapon tube have been changed.

Figure 5.- Is a front view of the same device of figure 4.

Figure 6.- Is a side elevation view of the device shown in the foregoing two figures.

Figure 7.- Is a sectional view, along line A-B, of figure 1, such section longitudinally showing the device sight system.

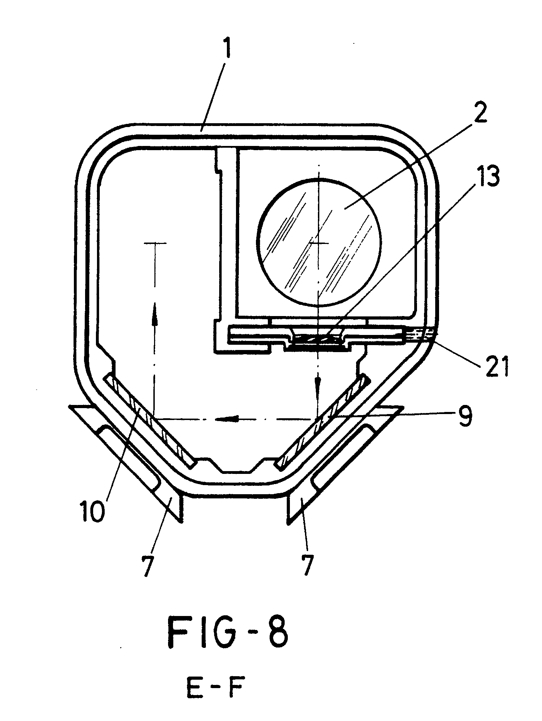

Figure 8.- Is a projection view along E-F of figure 6, showing the internal arrangement of the reflector elements or mirrors and the actual object glass.

Figure 9.- Is a section of the mirror constituting the first device reflector, in the embodiment where such mirror is assembled on a fixed support. This section corresponds to line C-D of figure 1.

Figure 10.- Is another section on the same plane as the previous figure, but this time showing a second embodiment as to the mirror assembly. In this embodiment, the mirror is assembled on a mobile support that includes a bimetal.

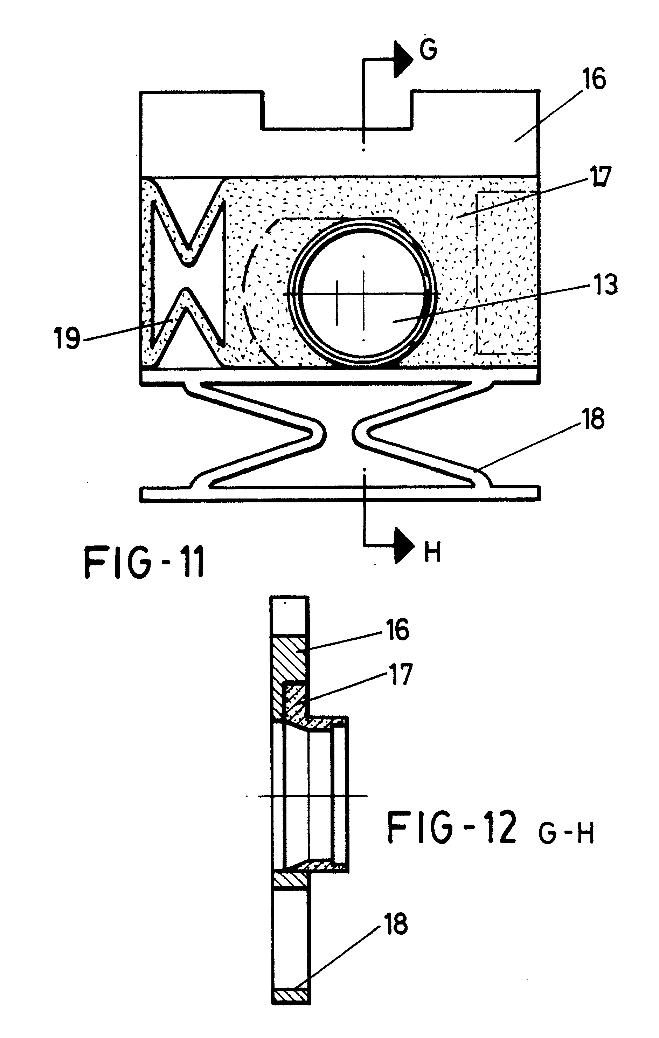

Figure 11.- Is another view of the unit wherein the device object glass is assembled, such unit formed by two plates related and sliding with respect to each other, which have elastic elements allowing their position and in short the object glass position to be changed.

Figure 12.- Is a section along line G-H of the previous figure, without the object glass.

Figure 13.- Is a diagrammatic view of the arrangement of the different elements of the device, as well as the trajectory of the ray.

Figure 14.- Is a likewise diagrammatic view of the arrangement of the four device reflector elements, and the trajectory or direction followed by the ray that is reflected on the said four elements.

Figure 15.- Is a front view of the reticle.

## DESCRIPTION OF THE PREFERRED EMBODIMENT OF THE INVENTION

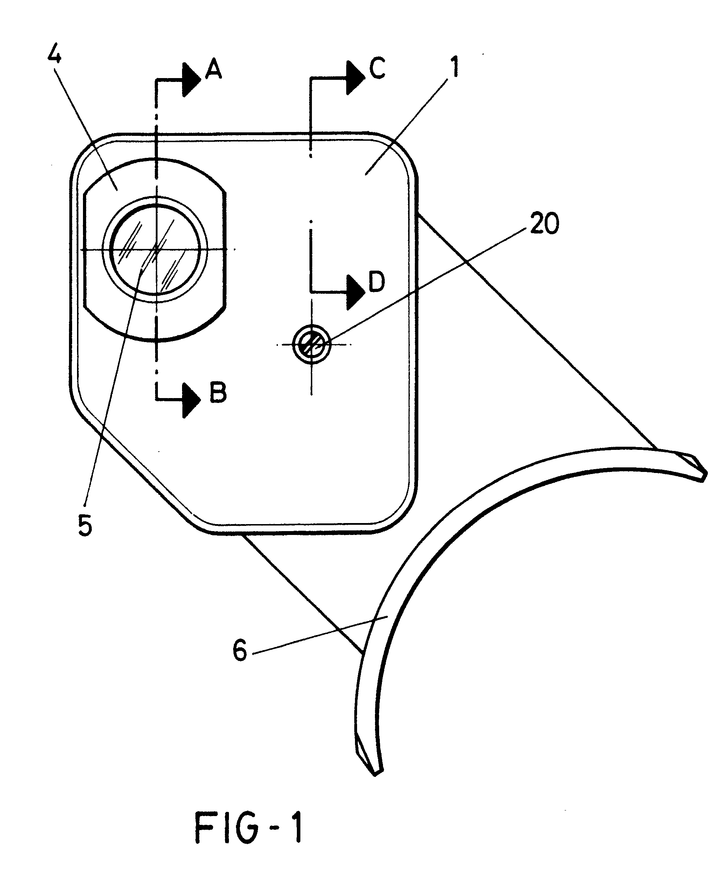

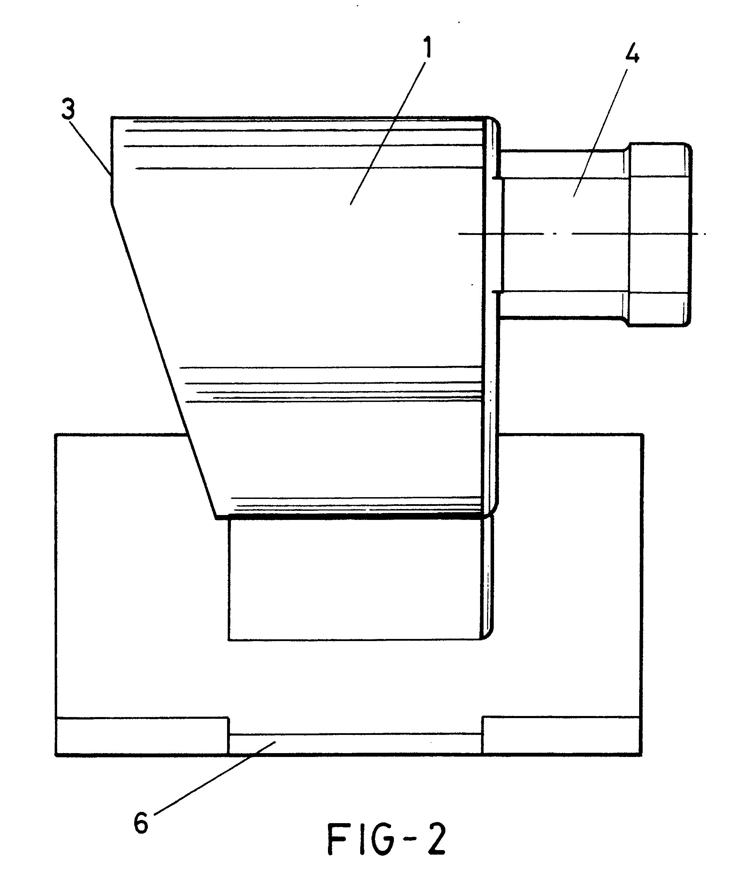

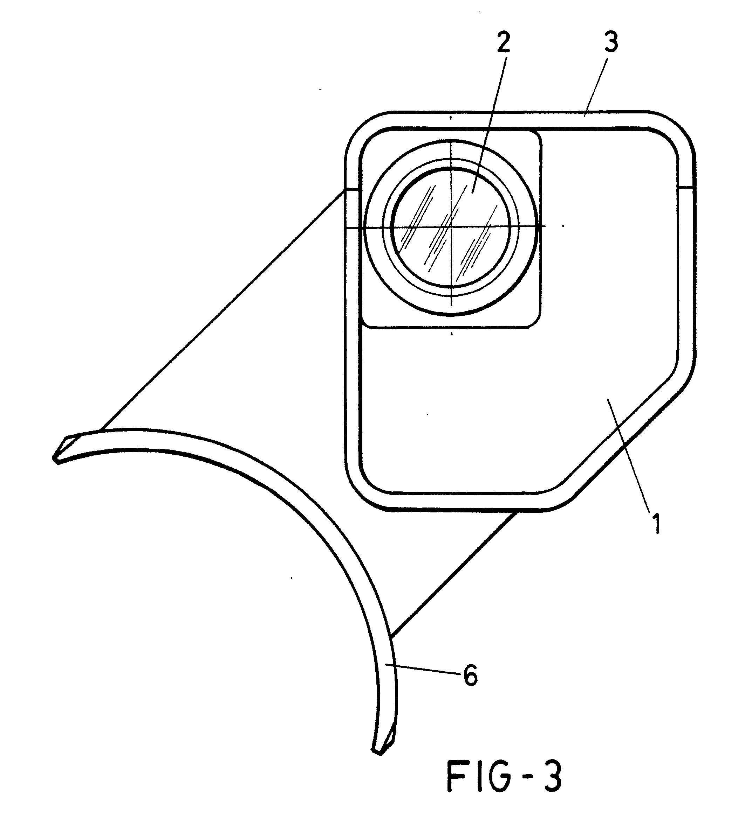

In the light of the said figures, and specifically in relation with figures 1, 2 and 3, the device of the invention comprises a general framework (1), with a prism-like shape having no sharp edges. Its front surface is provided with an opening taken up by a glass (2), protected by a sort of cover (3); whereas the rear surface is provided with an extension (4) at a right angle to the said surface, the inside of such extension being fitted with the sight described hereinafter, its end having an opening taken up by a lens (5) through which the user will apply his sight to attract the image that shall penetrate through the glass (2) provided in the foregoing opening.

The lower part of such framework (1) projects into a cylindrical-type extension (6) through which the device is adapted and assembled on the launching tube of the relevant weapon.

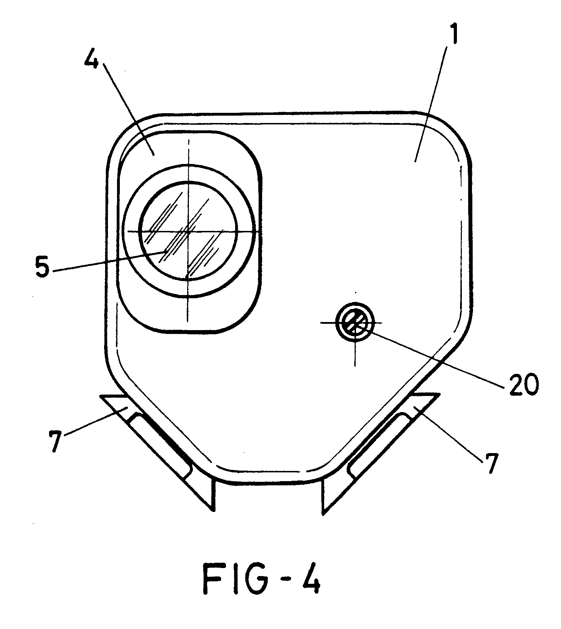

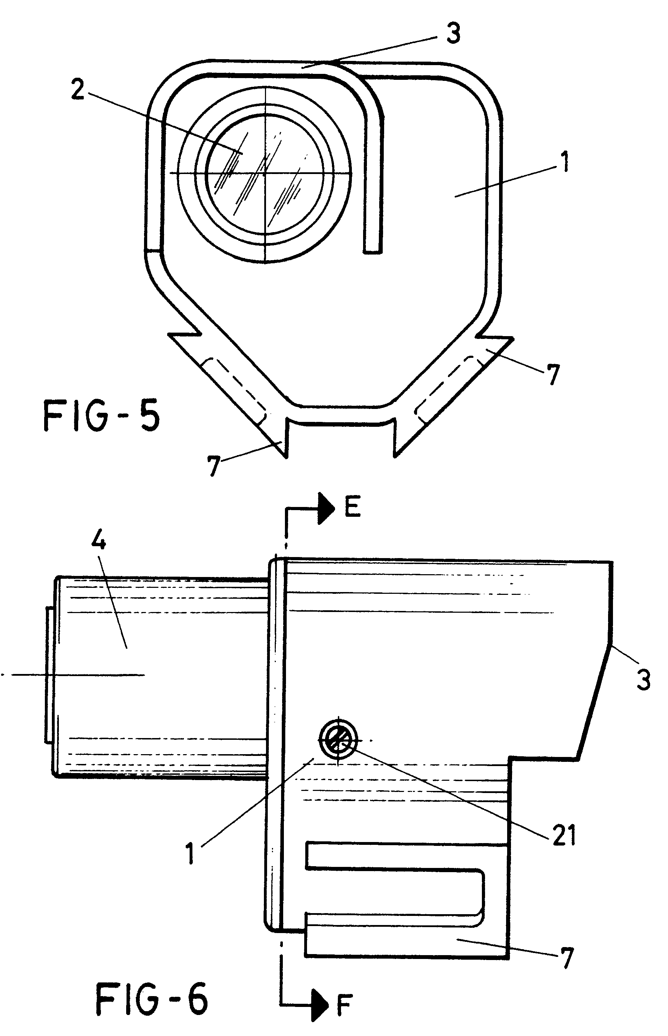

Figures 4, 5 and 6 show a second embodiment of this assembly means, with a framework basically coinciding with the above, and therefore the same references are included; in this second embodiment such assembly means constitute dove-tail projections (7), specifically two projections being identical and out of step, thereby allowing the device to be assembled in two positions and thus be adapted to the user's satisfaction, depending on whether he is right or left-handed.

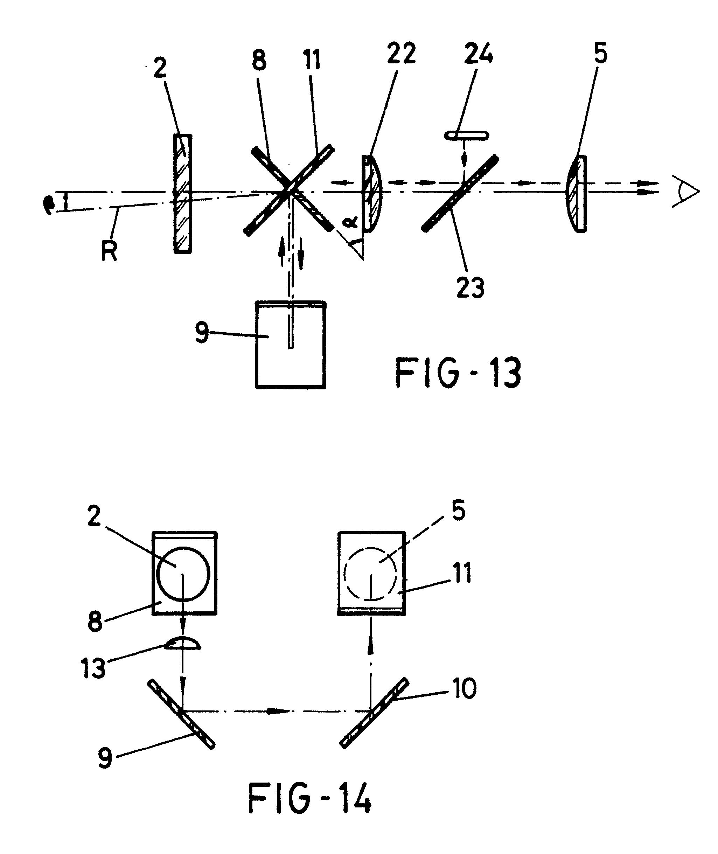

The inside of the framework (1) is duly designed and divided to assemble four reflector elements (8), (9), (10) and (11), constituted by the same number of mirrors. The object glass (13) and the sight unit (14) are also assembled, the latter inside the extension (4). Figures 13 and 14 show the arrangement of the said reflector elements, and those of the sight and other components of the device.

Through the reflection movement (as shown by the arrows of figures 13 and 14) in the four reflector elements (8), (9), (10) and (11), the optical axis is altered an angle, chosen in accordance with the characteristics of the invention.

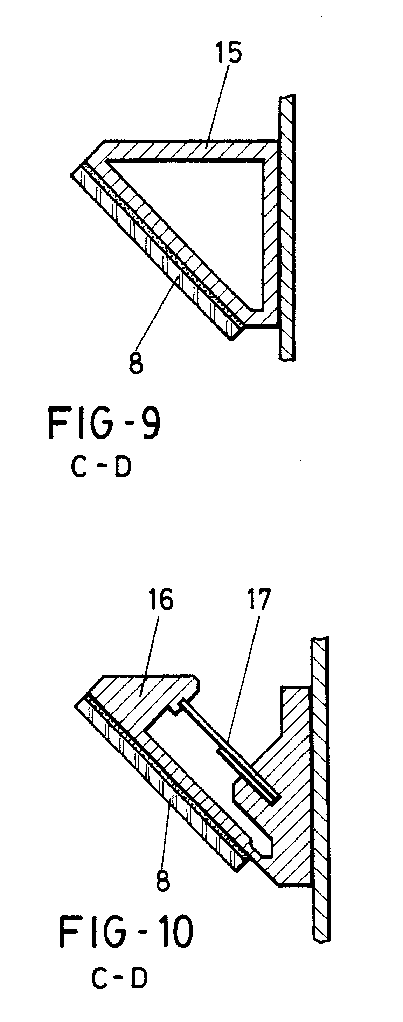

The first reflector, numbered (8), may be assembled on a fixed support (15), as shown in figure 9, or else be assembled on a tilting support (16) as shown in figure 10. In this second case, the said tilting support (16) is moved by a bimetal (17) that acts in accordance with room temperature and/or in accordance with the actual propellant, so that in both cases the bimetal, sensitive to temperature changes or variations, will cause the support (16) to tilt, in short varying the mirror (8) angle.

The angle variation of the said mirror or first reflector element (8), as a consequence of this possible tilting of the mobile support (16) whereon it is assembled, will always be effected beyond $45°$ so that the angle a shown in figure 13 and that is formed by the mirror plane and the vertical plane, will always be equal to or slightly over $45°$. Such characteristic causes angle $ß$ (shown exaggeratedly as to size) to be comprised between the main receptor ray (R) and the weapon axis.

Therefore the target aimed at will be found in the the trajectory of the said main receptor ray (R), shown in figure 13.

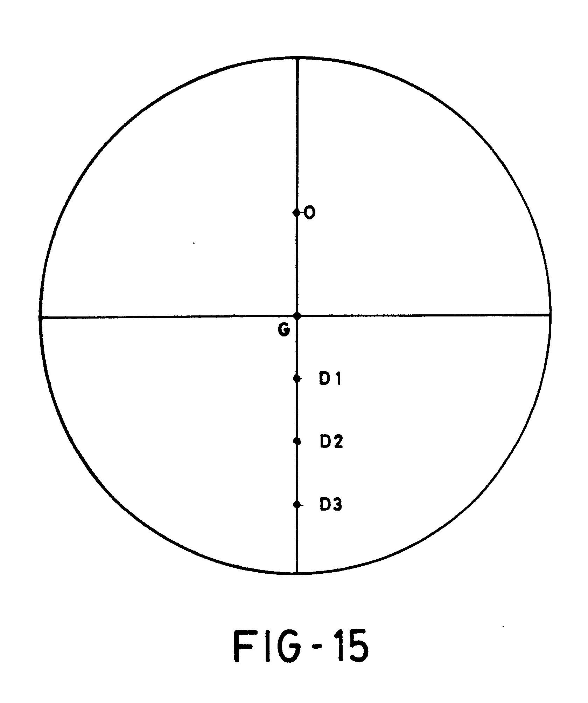

This angle variation entails an upward variation from "zero" position in the reticle shown in figure 15; and such upward position change allows all the field observed to be used to add the shot trajectory table, whereas in the conventional devices only half the observation field can be used.

Figure 15 shows the reticle with its geometric centre "G", the upper position of "O" in accordance with a given angle of variation of the mirror or reflector element (8), and the distances to the target in accordance with pre-established tables, ranges corresponding to points $D_1$, $D_2$, $D_3$, ..., and as it may be observed and deduced any ranges can be aimed at by merely positioning the "O" further up, obviously changing the mirror (8) angle, such operation being effected automatically in accordance with the room temperature changes or changes generated when launching the projectile, through heating of the propellant.

In this figure 15, if for instance the aforesaid ranges $D_1$, $D_2$ and $D_3$ were 200, 300 and 400 metres, obviously the range of 100 metres would be located in the horizontal corresponding to the geometrical centre G, since as aforesaid, the "O" is in a higher position. In short, the higher the "O" position the larger the range at which a target may be, and this on the basis of the angle variation of the mirror or first reflector element (8), and so with the same size conditions of the reticle, the device of the invention affords a field vision double in height to that attained with the conventional systems.

The object glass (13) is assembled between the said first mirror or reflector element (8) and the second reflector (9), such device being in a unit formed by two duly guided plates (17) and (18), sliding with regard to each other and both being provided with a hole or opening for assembly of the actual corresponding lens or object glass. One of the edges of the plates (16) and (17) are provided with two elastic elements acting as springs (18) and (19), respectively, through which adjustment of the device may be improved, by merely acting on two external screws (20) and (21).

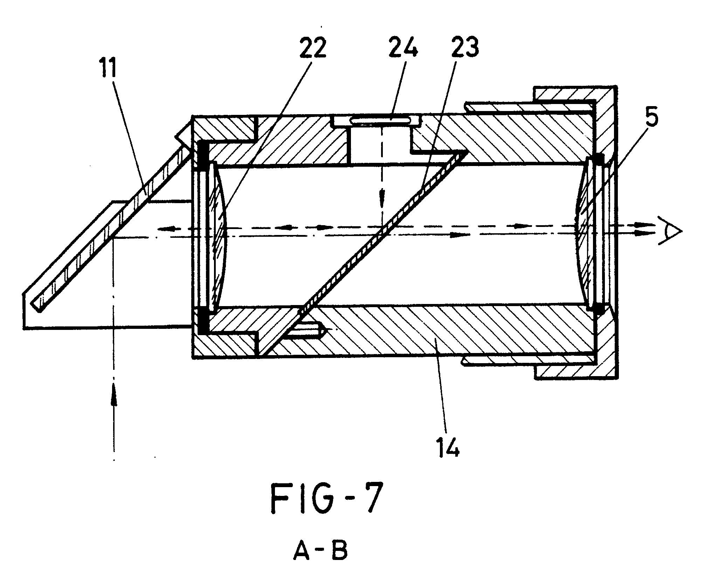

As to the sight (14) fully assembled in figure 7, it includes, after the reflector element (11), a first flat-spherical lens (22) acting as corrective field lens and as a reticle; faced by a second flat-spherical lens (5) acting as a sight. A selective reflector (23) is provided, at an angle of 45°, between the two lenses (22) and (5) together with a light source (24) the light rays of which fall on the surface of the said selective reflector (23), being reflected on the actual lens (22) reticle, constituting an epi-illumination system of the reticle allowing, when in the dark, illumination of the actual strokes of the said reticle.

The said reticle or lens (22) comprising the former, must be made of transparent glass, will allow passage of the light in the direction of illumination, only light from the reticle strokes metallized on the flat surface of the lens (22) being reflected.

## Claims

1.- Aiming device for light weapons, provided to be assembled on a light weapon launching tube, to be thrown out together with the same after the relevant shot, which device comprises an optical system, an object glass and a sight, as basic components, and is essentially characterized in that the optical system includes four reflector elements (8), (9), (10) and (11), constituted by two mirrors provided inside a framework (1), the latter being internally provided with flat surfaces and divisions duly suited for arrangement of the reflector elements (9) and (10), as well as for location of the reflector elements (8) and (11), respectively; it having been foreseen that the said reflector elements successively form 90° angles to each other, with the particularity that the first reflector element (8) is assembled on a support that may change its angle to automatically compensate trajectory drifts; the object glass (13) being adjustably assembled between the said first reflector element (8) and the second reflector element (9), whereas the sight (14) altogether includes two flat-spherical optical elements (22) and (5), the first acting as a corrective field lens and as a reticle, whereas the second flat-spherical element (5) acts as actual sight lens; a selective reflector (23) having been foreseen between the two optical elements or lenses (22) and (5) that, together with a duly positioned light source, constitutes an epi-illumination system of the actual reticle allowing, when in the dark, illumination of the strokes forming such reticle.

2.- Aiming device for light weapons, in accordance with claim 1, characterized in that the first reflector element (8) is assembled on a fixed support (15).

3- Aiming devices for light weapons, in accordance with claim 1, characterized in that the first reflector element (8) is assembled on a tilting support (16) moved by a bimetal (17) that can be operated under any temperature change, both environmental and generated when shooting by the propellant.

4.- Aiming device for light weapons, in accordance with previous claims, characterized in that the object glass (13) is assembled on an opening provided in a pair of plates (16) and (17), slidingly related to each other, in accordance with an arrangement of coordinates axis and provided with two elastic elements (18) and (19) on two edges defining respective springs allowing fine adjustment of the unit, after operating corresponding screws (20) and (21).

5.- Aiming device for light weapons, in accordance with the previous claim, characterized in that the unit formed by both plates (16) and (17) for assembly of the object glass (13), the latter constituting a lens, is guided in slots corresponding to internal partitions of the framework (1).

6.- Aiming device for light weapons, in accordance with previous claims, characterized in that the lower and external part of the framework (1) projects into a curved extension (6) for adjustment and assembly on the side surface of the corresponding weapon launching tube.

7.- Aiming device for light weapons, in accordance with claims 1 through 5, characterized in that the framework (1) has two areas out of step with respect to each other, a pair of dove-tail projections (7) for assembly thereof, in two positions of the device on the actual weapon launching tube, allowing it to be used by right and left-handed people with no distinction.

FIG - 1

FIG-2

FIG-3

FIG - 4

FIG-5

FIG-6

FIG-7

A-B

FIG-8

E-F

**15**

**8**

# FIG-9

## C-D

**16** **17**

**8**

# FIG-10

## C-D

FIG-11

FIG-12 G-H

FIG - 13

FIG - 14

FIG-15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 994 597 (W.E. CALDER et al.) * Abstract; figures 1-17 * | 1,4,5 | G 02 B 23/14 |
| A | US-A-4 158 504 (D DE PONTEVES et al.) * Abstract; figures 1-4 * | 1 | |
| A | EP-A-0 244 770 (POLAROID) * Abstract; figures 1-10 * | 3 | |

TECHNICAL FIELDS SEARCHED (Int. Cl.5)

G 02 B
F 41 G

The present search report has been drawn up for all claims

| Place of search | Date of completion of the search | Examiner |
|---|---|---|
| THE HAGUE | 09-07-1990 | MALIC K. |

EPO FORM 1503 03.82 (P0401)